# EUROPEAN PATENT SPECIFICATION

(11) **EP 3 539 937 B1**
(45) Date of publication and mention of the grant of the patent: **17.03.2021**
(21) Application number: 17868817.2
(22) Date of filing: 07.11.2017
(51) Int. Cl.: C04B 22/08, C04B 22/14, C04B 28/02

(54) **CEMENT ADMIXTURE, CEMENT COMPOSITION USING SAME, AND PROCESSING METHOD FOR PREVENTING SALT DAMAGE IN CONCRETE STRUCTURE**
ZEMENTZUSATZMITTEL, ZEMENTZUSAMMENSETZUNG DAMIT UND VERARBEITUNGSVERFAHREN ZUR VERHINDERUNG VON SCHÄDEN IN EINER BETONSTRUKTUR
MÉLANGE DE CIMENT, COMPOSITION DE CIMENT L'UTILISANT, ET PROCÉDÉ DE TRAITEMENT POUR EMPÊCHER LES DOMMAGES OCCASIONNÉS PAR LE SEL DANS UNE STRUCTURE EN BÉTON

(30) Priority: 11.11.2016 JP 2016220103
(43) Date of publication of application: 18.09.2019
(73) Proprietor: Denka Company Limited, Tokyo 103-8338 (JP)
(72) Inventor: MORI, Taiichiro, Itoigawa-city Niigata 949-0393 (JP); KURAMOTO, Yuta, Itoigawa-city Niigata 949-0393 (JP); YOSHIOKA, Maho, Itoigawa-city Niigata 949-0393 (JP); MORIOKA, Minoru, Itoigawa-city Niigata 949-0393 (JP)
(74) Representative: Ter Meer Steinmeister & Partner
(86) International application number: PCT/JP2017/040141
(87) International publication number: WO 2018/088405

(56) References cited:
- EP-A1- 2 803 649
- JP-A- S 515 333
- JP-A- S4 729 420
- JP-A- S47 035 020
- JP-A- 2005 104 828
- JP-A- 2010 100 469

## Description

### Technical Field

The present invention relates to a cement admixture and a cement composition using the same, and particularly to a cement admixture used in civil engineering and construction, relating to durability, resistance to penetration of chloride ion, and temperature cracking resistance, and to a processing method for suppressing a salt damage of a concrete structure.

### Background Art

In recent years, there is an increasing demand of the enhancement of the durability of a concrete structure in the civil engineering and construction fields.

One of the factors deteriorating a concrete structure is a salt damage, in which corrosion of a reinforcing steel becomes conspicuous due to the presence of chloride ion, and a method for suppressing the salt damage includes a method of imparting resistance to penetration of chloride ion to the concrete structure.

A known method for suppressing penetration of chloride ion into the interior of a hardened concrete material and imparting resistance to penetration of chloride ion thereto includes a method of decreasing the water/cement ratio (see NPL 1). However, the method of decreasing the water/cement ratio not only deteriorates the workability but also cannot be a fundamental measure in some cases.

For the purpose of imparting early strength properties to a cement concrete and preventing corrosion of a reinforcing steel, a method of using a cement admixture containing mainly CaO·2Al₂O₃ and gypsum and further containing an inorganic chloride is proposed (see PTL 1).

Furthermore, a method of providing excellent resistance to penetration of chloride ion and suppressing temperature cracking of a mass concrete by using a cement admixture containing a calcium aluminate having a CaO/Al₂O₃ molar ratio of 0.3 to 0.7 and a Blaine specific surface area of 2,000 to 6,000 cm²/g or a calcium ferroaluminate compound having a CaO/Al₂O₃ molar ratio of 0.15 to 0.7 is proposed (see PTL 2).

However, these cement admixtures exhibit rapid hardening properties under a high temperature environment, so as to provide a problem that the workability of the cement concrete containing the admixtures is deteriorated. For example, in the climates with high temperatures accelerating salt damage and oxidation deterioration, such as Okinawa in Japan and Singapore in overseas, rapid hardening properties are exhibited, and not only the workability is deteriorated, but also it has now been found by the various experiments by the present inventors that the resistance to penetration of chloride ion cannot be sufficiently exhibited. The development of a rust inhibiting technique that more effectively behaves under such a high temperature environment that the diffusion rate of corrosion component is large, and the corrosion reaction is accelerated is being demanded.

It has also known that a cement composition having water granulated blast furnace slag fine powder or a pozzolanic substance mixed therein enhances the resistance to penetration of chloride ion. The mechanism that the penetration of chloride ion is suppressed is that the Al component in the water granulated blast furnace slag fine powder chemically fixes or electrically adsorbs the chloride ion. Furthermore, it is considered that the pozzolanic substance involves the reduction of calcium hydroxide in the hardened cement material, and suppresses the formation of voids of several tens micrometers to several hundred micrometers, which are formed through elution of calcium hydroxide into seawater. However, the reaction of the water granulated blast furnace slag fine powder or the pozzolanic substance occurs over a prolonged period of time, providing a tendency that the initial strength is prevented from being exhibited, and there is a problem that the early age material immersed in seawater is deteriorated in the resistance to penetration of chloride ion, deteriorating the concrete. Accordingly, for the enhancement of the durability, i.e., the seawater resistance, it is necessary that the reaction in the hardened cement material is accelerated to decrease the penetration of chloride ion due to the action of seawater in the stage of the early age material.

Furthermore, for the rust inhibition of a reinforcing steel, a method of adding a nitrite salt or the like is proposed (see PTL 3 and PTL 4). However, a nitrite salt does not exhibit an effect of imparting acid resistance.

Moreover, there is a strong demand of a technique for the suppression of temperature cracking becoming conspicuous in a massive concrete, i.e., a so-called mass concrete.

As a technique for the suppression of temperature cracking of a mass concrete, a method of applying an organic hydration heat inhibitor is proposed (see PTLs 5 to 8).

However, the method has a problem that the setting time is prolonged, the bleeding tends to occur, and the surface of the hardened material is roughened.

### Citation List

### Patent Literatures

PTL 1: JP 47-035020 A
PTL 2: JP 2005-104828 A
PTL 3: Japanese Patent No. 5,688,073
PTL 4: JP 01-103970 A
PTL 5: JP 06-305799 A
PTL 6: JP 2002-137951 A
PTL 7: JP 2002-241167 A
PTL 8: JP 2003-034564 A

NPL 1: "Series of Durability of Concrete Structure, Salt Damage (I)", edited by Kouichi KISHITANI, Noriaki NISHIZAWA, et al., published by Gihodo Shuppan Co., Ltd., pp. 34 to 37, May of 1986

JP2010 100469 describes a cement admixture with a CA ratio of 0,15-0.7 for the reduction of chlorine penetration in concrete.

### Summary of Invention

### Technical Problem

An object of the present invention is to provide a cement admixture and a cement composition using the same, particularly to a cement admixture providing resistance to penetration of chloride ion and temperature cracking resistance, which is used in civil engineering and construction.

### Solution to Problem

Accordingly, the present invention is as follows.
[1] A cement admixture containing a calcium aluminate having a chemical composition containing from 21 to 27 parts by mass of CaO, from 65 to 73 parts by mass of Al₂O₃, from 1 to 5 parts by mass of SiO₂, from 1 to 6 parts by mass of Fe₂O₃, and from 1 to 5 parts by mass of TiO₂, based on the total amount of CaO, Al₂O₃, SiO₂, Fe₂O₃, and TiO₂, and having a Blaine specific surface area of 2,000 to 6,000 cm²/g.
[2] The cement admixture according to the item [1], wherein the chemical composition contains from 21 to 25 parts by mass of CaO, from 67 to 71 parts by mass of Al₂O₃, from 2 to 4 parts by mass of SiO₂, from 2 to 5 parts by mass of Fe₂O₃, and from 2 to 4 parts by mass of TiO₂.
[3] The cement admixture according to the item [1] or [2], further containing a gypsum compound.
[4] The cement admixture according to any one of the items [1] to [3], which has resistance to penetration of chloride ion.
[5] A cement composition containing a cement and the cement admixture according to any one of the items [1] to [4].
[6] A processing method for suppressing a salt damage of a concrete structure, including coating a cement concrete containing the cement composition according to the item [5] on a surface of an existing or newly constructed concrete structure.

### Advantageous Effects of Invention

According to the present invention, such a concrete structure can be provided that has excellent resistance to penetration of chloride ion, can sufficiently ensure the period of time required for setting and hardening (i.e., the usable time) of the cement concrete, is excellent in the strength exhibition and the dimensional stability, and can significantly reduce temperature cracking in the use in a mass concrete.

### Description of Embodiments

The cement concrete referred in the present invention collectively means a cement paste, a mortar, and a concrete.

The present invention relates to a cement admixture containing a calcium aluminate having a chemical composition containing from 21 to 27 parts by mass of CaO, from 65 to 73 parts by mass of Al₂O₃, from 1 to 5 parts by mass of SiO₂, from 1 to 6 parts by mass of Fe₂O₃, and from 1 to 5 parts by mass of TiO₂, based on the total amount of CaO, Al₂O₃, SiO₂, Fe₂O₃, and TiO₂, and having a Blaine specific surface area of 2,000 to 6,000 cm²/g, to the cement admixture that further contains a gypsum compound, and to a cement composition containing a cement and the cement admixture.

The calcium aluminate (which may be hereinafter referred to as CA) used in the present invention has a chemical composition in a range of 21 to 27 parts by mass of CaO, from 65 to 73 parts by mass of Al₂O₃, from 1 to 5 parts by mass of SiO₂, from 1 to 6 parts by mass of Fe₂O₃, and from 1 to 5 parts by mass of TiO₂, and more preferably in a range of 21 to 25 parts by mass of CaO, from 67 to 71 parts by mass of Al₂O₃, from 2 to 4 parts by mass of SiO₂, from 2 to 5 parts by mass of Fe₂O₃, and from 2 to 4 parts by mass of TiO₂, based on the total amount of CaO, Al₂O₃, SiO₂, Fe₂O₃, and TiO₂. With a chemical composition outside the range, there may be a case where the sufficient flowability, strength exhibition, dimensional stability, and resistance to penetration of chloride ion cannot be obtained, and the hydration heat becomes large.

The CA in the present invention may contain MgO, R₂O (wherein R represents an alkali metal), and the like with no particular problem, as far as the total amount thereof is 10% by mass or less. The CA in the present invention may contain a glass phase formed through quenching with no particular problem, as far as the total amount thereof is 10% by mass or less.

The degree of fineness of the CA is, in terms of Blaine specific surface area (which may be hereinafter referred to as a Blaine value), from 2,000 to 6,000 cm²/g, and more preferably from 2,500 to 5,000 cm²/g. With coarse particles of less than 2,000 cm²/g, there may be a case where the sufficient resistance to penetration of chloride ion cannot be obtained, and with fine particles exceeding 6,000 cm²/g, rapid hardening properties may be exhibited, resulting in a case where the sufficient flowability and usable time cannot be ensured, and a case where the sufficient resistance to penetration of chloride ion cannot be obtained.

The raw materials used in the production of the cement admixture used in the present invention will be described.

The raw material containing CaO is not particularly limited. Examples thereof include calcined lime (CaO), hydrated lime (Ca(OH)₂), and limestone (CaCO₃), which are commercially available as industrial materials.

The raw material containing Al₂O₃ is not particularly limited. Examples thereof include Al₂O₃, aluminum hydroxide, and bauxite, which are commercially available as industrial materials. The bauxite is preferred since not only Fe₂O₃, but also SiO₂ or TiO₂ are contained besides Al₂O₃.

The raw material containing SiO₂ is not particularly limited. Examples thereof include silica stone, silica sand, quartz, and diatom earth, which are commercially available as industrial materials. It may not be used in the case where the necessary amount of SiO₂ is contained in the raw materials containing CaO and Al₂O₃.

The raw material containing Fe component as a source of Fe₂O₃ is not particularly limited. Examples thereof include iron ore and Fe₂O₃ obtained through recovery and purification of waste hydrochloric acid of acid cleaning of steel materials, which are commercially available as industrial materials. It may not be used in the case where the necessary amounts of Fe, FeO, Fe₂O₃, and Fe₃O₄ are contained in the raw materials containing CaO and Al₂O₃.

The raw material containing TiO₂ is not particularly limited. Examples thereof include TiO₂, rutile ore, and ilmenite ore, which are commercially available as industrial materials.

The degree of fineness of the cement admixture used in the present invention is not particularly limited, and is generally, in terms of Blaine specific surface area, preferably from 2,000 to 6,000 cm²/g, and more preferably from 2,500 to 5,000 cm²/g. With coarse particles of less than 2,000 cm²/g, there may be a case where the resistance to penetration of chloride ion and the strength exhibition cannot be sufficiently obtained, and with fine particles exceeding 6,000 cm²/g, rapid hardening properties may be exhibited, resulting in a case where the sufficient usable time cannot be ensured.

The amount of the cement admixture of the present invention used is not particularly limited, and is generally preferably from 1 to 20 parts by mass, and more preferably from 3 to 10 parts by mass, per 100 parts by mass of a cement composition containing a cement and the cement admixture. In the case where the amount of the cement admixture used is less than 1 part by mass, there may be a case where the sufficient resistance to penetration of chloride ion and temperature cracking resistance cannot be obtained, and in the case where the cement admixture is used excessively exceeding 20 parts by mass, rapid hardening properties may be exhibited, resulting in a case where the sufficient usable time cannot be ensured, and a case where the strength exhibition is deteriorated. Furthermore, from the standpoint of the achievement of both the sufficient resistance to penetration of chloride ion and temperature cracking resistance, the amount of the cement admixture of the present invention used is further preferably from 5 to 15 parts by mass per 100 parts by mass of the cement composition.

In the present invention, a gypsum compound is preferably used in combination with the calcium aluminate from the standpoint of the improvement of the strength exhibition and the enhancement of the resistance to penetration of chloride ion.

The gypsum compound may be any of anhydrous gypsum, hemihydrate gypsum, and dihydrate gypsum, and anhydrous gypsum is preferred from the standpoint of the strength exhibition.

The degree of fineness of the gypsum compound is not particularly limited, and is generally, in terms of Blaine value, preferably from 3,000 to 8,000 cm²/g, and more preferably from 4,000 to 6,000 cm²/g. In the case where the degree of fineness of the gypsum compound is less than 3,000 cm²/g, there may be a case where the strength exhibition cannot be sufficiently obtained, and in the case where the degree of fineness of the gypsum compound exceeds 8,000 cm²/g, there may be a case where the workability is deteriorated.

The amount of the gypsum compound used is not particularly limited, and is generally preferably 50% by mass or less, and more preferably from 5 to 40 parts by mass, per 100 parts by mass of the cement admixture containing the calcium aluminate and the gypsum compound. The strength exhibition and the resistance to penetration of chloride ion are enhanced, and an effect of suppressing the contraction in hydration of the cement can be obtained. In the case where the amount of the gypsum compound used exceeds 50 parts by mass, there may be a case where cracks are formed through the expansion thereof over a long period of time, and there may be a case where the strength exhibition and the resistance to penetration of chloride ion cannot be obtained.

The cement used in the present invention is not particularly limited, and ordinary cements may be used. Specific examples thereof include various portland cements, such as normal, early strength, super early strength, moderate heat, and low heat cements, various mixed cements obtained by mixing a blast furnace slag, a fly ash, or silica with the portland cements, a filler cement obtained by mixing with limestone fine powder, air-cooled blast furnace slag fine powder, or the like, a waste-using cement, an eco-cement, an alumina cement, and a high alumina cement, and one kind or two or more kinds among these may be used.

In the present invention, the cement, the cement admixture, and a substance exhibiting a hydraulic property, a latent hydraulic property, or a pozzolanic activity as a binder can be used.

In the present invention, the ratio of water/binder is preferably from 25 to 70%, and more preferably from 30 to 65%. In the case where the ratio of water/binder is less than 25%, there may be a case where the pump pressure feedability and the workability are deteriorated, and contraction or the like may occur, and in the case where the ratio exceeds 70%, there may be a case where the strength exhibition is deteriorated.

For the cement admixture and the cement composition of the present invention, all the materials may be mixed in working, and a part thereof or the entire thereof may be mixed in advance.

In the present invention, besides the cement, the cement admixture, a fine aggregate, such as sand, and a coarse aggregate, such as gravel, one kind or two or more kinds of the group consisting of various additives, such as an expanding material, a rapid hardening material, a water reducing agent, an AE water reducing agent, a high-performance water reducing agent, a high-performance AE water reducing agent, a defoaming agent, a thickening agent, a rust inhibiting agent, an antifreezing agent, a contraction reducing agent, a polymer emulsion, a setting modifier, a clay mineral, e.g., bentonite, and an anion exchanger, e.g., hydrotalcite; and an admixture material such as water granulated blast furnace slag fine powder, air-cooled blast furnace slag fine powder, limestone fine powder, a fly ash and silica fume may be used in such a range that does not impair the object of the present invention.

The use of the cement admixture of the present invention provides the effect of providing a cement composition that has excellent resistance to penetration of chloride ion, can sufficiently ensure the period of time required for setting and hardening (i.e., the usable time) of the cement concrete, is excellent in the strength exhibition and the dimensional stability, and can significantly reduce temperature cracking in the use as a mass concrete, and the like.

### Examples

### (Example 1)

Calcium carbonate, aluminum oxide, silicon dioxide, diiron trioxide, and titanium oxide as extra pure reagents were mixed in the prescribed ratio, melted in an electric furnace at 1,500°C, and then gradually cooled, so as to synthesize the calcium aluminate shown in Table 1, which was pulverized to a Blaine specific surface area of 3,000 cm²/g to provide a cement admixture.

10 parts by mass of the calcium aluminate as the cement admixture was mixed per 100 parts by mass of a cement composition containing a cement α and the cement admixture, so as to provide a cement composition, and 300 parts by mass of a fine aggregate was mixed per 100 parts by mass of the cement composition, so as to provide a mortar having a ratio of water/binder of 50%.

The mortar thus produced was measured for the flow, the setting time, the compression strength, and the chloride penetration depth, and observed for the presence of abnormal expansion. The results are shown in Table 2.

### (Materials Used)

Cement α: commercially available normal portland cement
Fine aggregate: Standard sand for cement strength test used in JIS R5201
Water: Tap water

### (Measurement Method)

Flow: The flow was measured according to JIS R5201.

Setting time: The setting time was measured according to ASTM C403.

Compression strength: A mortar test piece in the form of a square column of 4 cm × 4 cm × 16 cm was produced and measured for the compression strength after a material age of 28 days according to JIS R5201.

Chloride ion penetration depth: A mortar test piece in the form of a cylinder of 10 cm in diameter × 20 cm was produced, and the mortar test piece aged in water at 20°C to a material age of 28 days was immersed in a simulated seawater, which was a sodium chloride aqueous solution having a chloride ion concentration of 3.5% by mass, for 12 weeks, and then measured for the chloride ion penetration depth, so as to evaluate the resistance to penetration of chloride ion. The chloride ion penetration depth was measured in such a manner that a portion of the cross sectional surface of the mortar test piece that was not colored brown by the fluorescein-silver nitride method was measured with a vernier caliper at 8 positions, and the average value thereof was designated as the chloride ion penetration depth.

Presence of abnormal expansion: A mortar test piece was immersed in water at 20°C for 28 days, and measured for the length change rate according to JIS A6202(B), and observed for the occurrence of abnormal expansion and cracks associated thereto. The rating A means a length change rate of 2,000 × 10⁻⁶ or less with no abnormality, the rating B means abnormal expansion exceeding 2,000 × 10⁻⁶ observed, and the rating C means occurrence of cracks due to apparent abnormal expansion.

**Table 1**

| CA | Chemical composition (%) | | | | | |
|---|---|---|---|---|---|---|
| | CaO | Al₂O₃ | SiO₂ | Fe₂O₃ | TiO₂ | Total |
| a1 | 18 | 68 | 5 | 5 | 4 | 100 |
| a2 | 19 | 68 | 4 | 5 | 4 | 100 |
| a3 | 21 | 68 | 3 | 4 | 4 | 100 |
| a4 | 25 | 68 | 2 | 3 | 2 | 100 |
| a5 | 27 | 68 | 1 | 2 | 2 | 100 |
| a6 | 28 | 68 | 1 | 2 | 1 | 100 |
| b1 | 23 | 64 | 4 | 5 | 4 | 100 |
| b2 | 23 | 65 | 4 | 5 | 3 | 100 |
| b3 | 23 | 67 | 3 | 4 | 3 | 100 |
| b4 | 23 | 69 | 3 | 3 | 2 | 100 |
| b5 | 23 | 71 | 2 | 3 | 1 | 100 |
| b6 | 23 | 73 | 1 | 2 | 1 | 100 |
| b7 | 23 | 74 | 1 | 1 | 1 | 100 |
| c1 | 25 | 70 | 0 | 3 | 2 | 100 |
| c2 | 25 | 69 | 1 | 3 | 2 | 100 |
| c3 | 22 | 68 | 5 | 3 | 2 | 100 |
| c4 | 21 | 68 | 6 | 3 | 2 | 100 |
| d1 | 25 | 70 | 3 | 0 | 2 | 100 |
| d2 | 25 | 69 | 3 | 1 | 2 | 100 |
| d3 | 22 | 67 | 3 | 6 | 2 | 100 |
| d4 | 21 | 67 | 3 | 7 | 2 | 100 |
| e1 | 24 | 70 | 3 | 3 | 0 | 100 |
| e2 | 24 | 69 | 3 | 3 | 1 | 100 |
| e3 | 21 | 68 | 3 | 3 | 5 | 100 |
| e4 | 20 | 68 | 3 | 3 | 6 | 100 |

**Table 2**

| Experiment No. | CA | Flow (mm) | Setting time (min) | Compression strength (N/mm²) | Penetration depth of chloride ion (mm) | Presence of abnormal expansion | Note |
|---|---|---|---|---|---|---|---|
| 1-1 | a1 | 230 | 440 | 50 | 14 | A | Comparative Example |
| 1-2 | a2 | 220 | 430 | 53 | 8 | A | Reference Example |
| 1-3 | a3 | 215 | 425 | 57 | 6 | A | Example |
| 1-4 | a4 | 200 | 405 | 61 | 9 | A | Example |
| 1-5 | a5 | 190 | 380 | 63 | 10 | A | Example |
| 1-6 | a6 | 180 | 370 | 65 | 18 | A | Comparative Example |
| 1-7 | b1 | 180 | 380 | 63 | 15 | A | Comparative Example |
| 1-8 | b2 | 200 | 390 | 60 | 10 | A | Example |
| 1-9 | b3 | 220 | 430 | 55 | 5 | | Example |
| 1-10 | b4 | 220 | 430 | 55 | 5 | A | Example |
| 1-11 | b5 | 225 | 450 | 53 | 7 | A | Example |
| 1-12 | b6 | 230 | 470 | 45 | 8 | A | Example |
| 1-13 | b7 | 240 | 480 | 42 | 12 | A | Comparative Example |
| 1-11 | c1 | 180 | 380 | 55 | 6 | A | Comparative Example |
| 1-12 | c2 | 200 | 400 | 53 | 7 | A | Example |
| 1-13 | c3 | 210 | 420 | 51 | 9 | A | Example |
| 1-14 | c4 | 215 | 430 | 48 | 12 | A | Comparative Example |
| 1-15 | d1 | 175 | 430 | 56 | 6 | A | Comparative Example |
| 1-16 | d2 | 205 | 440 | 52 | 8 | A | Example |
| 1-17 | d3 | 210 | 445 | 50 | 10 | A | Example |
| 1-18 | d4 | 220 | 450 | 47 | 13 | A | Comparative Example |
| 1-19 | e1 | 185 | 435 | 55 | 5 | A | Comparative Example |
| 1-20 | e2 | 200 | 440 | 53 | 7 | A | Example |
| 1-21 | e3 | 210 | 445 | 51 | 9 | A | Example |
| 1-22 | e4 | 215 | 450 | 43 | 12 | A | Comparative Example |

### (Example 2)

The same procedure was performed as in Example 1 except that the amount of the calcium aluminate (b3) used was changed. The results are shown in Table 3.

**Table 3**

| Experiment No. | CA | Flow (mm) | Setting time (min) | Compression strength (N/mm²) | Penetration depth of chloride ion (mm) | Presence of abnormal expansion | Note |
|---|---|---|---|---|---|---|---|
| 3-1 | 0 | 240 | 440 | 60 | 20 | A | Comparative Example |
| 3-2 | (b3) 1 | 235 | 440 | 57 | 15 | A | Example |
| 3-3 | (b3) 3 | 230 | 435 | 56 | 10 | A | Example |
| 3-4 | (b3) 5 | 230 | 430 | 55 | 5 | A | Example |
| 1-9 | (b3) 10 | 220 | 430 | 55 | 5 | A | Example |
| 3-5 | (b3) 15 | 210 | 425 | 53 | 5 | A | Example |
| 3-6 | (b3) 20 | 200 | 425 | 50 | 5 | A | Example |

### (Example 3)

The same procedure was performed as in Example 1 except that the degree of fineness of the calcium aluminate (b3) was changed. The results are shown in Table 4.

**Table 4**

| Experiment No. | Blaine value of CA (b3) (cm²/g) | Flow (mm) | Setting time (min) | Compression strength (N/mm²) | Penetration depth of chloride ion (mm) | Presence of abnormal expansion | Note |
|---|---|---|---|---|---|---|---|
| 4-1 | 1,000 | 250 | 450 | 48 | 12 | A | Comparative Example |
| 4-2 | 2,000 | 240 | 440 | 50 | 10 | A | Example |
| 4-3 | 2,500 | 235 | 430 | 53 | 8 | A | Example |
| 1-9 | 3,000 | 220 | 430 | 55 | 5 | A | Example |
| 4-4 | 5,000 | 210 | 420 | 57 | 7 | A | Example |
| 4-5 | 6,000 | 200 | 400 | 60 | 8 | A | Example |
| 4-6 | 7,000 | 185 | 385 | 63 | 10 | A | Comparative Example |

### (Example 4)

The same procedure was performed as in Example 1 except that the calcium aluminate (b3) was used, and the kind of the cement was changed. The results are shown in Table 5.

### (Materials Used)

Cement β: blast furnace cement type B, commercially available product
Cement γ: low-heat portland cement, commercially available product

**Table 5**

| Experiment No. | Cement | Flow (mm) | Setting time (min) | Compression strength (N/mm²) | Penetration depth of chloride ion (mm) | Presence of abnormal expansion | Note |
|---|---|---|---|---|---|---|---|
| 1-9 | α | 220 | 430 | 55 | 5 | A | Example |
| 5-1 | β | 230 | 480 | 51 | 3 | A | Example |
| 5-2 | γ | 235 | 700 | 47 | 2 | A | Example |

### (Example 5)

The same procedure was performed as in Example 1 except that the calcium aluminate (b3) and the gypsum compound shown in Table 6 were mixed to provide a cement admixture, and 10 parts by mass of the cement admixture was used per 100 parts by mass of the cement composition. The results are shown in Table 6.

### (Materials Used)

Gypsum compound A: anhydrous gypsum, Blaine specific surface area: 4,000 cm²/g
Gypsum compound B: hemihydrate gypsum, Blaine specific surface area: 4,000 cm²/g
Gypsum compound C: dihydrate gypsum, Blaine specific surface area: 4,000 cm²/g

**Table 6**

| Experiment No. | CA (b3) (part by mass) | Gypsum compound (part by mass) | Flow (mm) | Setting time (min) | Compression strength (N/mm²) | Penetration depthof (mm) chloride ion | Presence of abnormal expansion | Note |
|---|---|---|---|---|---|---|---|---|
| 1-9 | 100 | 0 | 220 | 430 | 55 | 5 | A | Example |
| 6-1 | 95 | A 5 | 220 | 440 | 57 | 5 | A | Example |
| 6-2 | 90 | A 10 | 220 | 440 | 59 | 4 | A | Example |
| 6-3 | 80 | A 20 | 220 | 440 | 61 | 4 | A | Example |
| 6-4 | 70 | A 30 | 220 | 450 | 62 | 3 | A | Example |
| 6-5 | 60 | A 40 | 220 | 450 | 64 | 4 | A | Example |
| 6-6 | 50 | A 50 | 220 | 460 | 66 | 6 | B | Example |
| 6-7 | 70 | B 30 | 220 | 430 | 58 | 5 | A | Example |
| 6-8 | 70 | C 30 | 220 | 440 | 59 | 6 | A | Example |

### (Example 6)

The calcium aluminate (b3) was used as the cement admixture, and the effect of suppressing temperature cracking of mass concrete was investigated.

The cement admixture was used in the amount shown in Table 7 per 100 parts by mass of the cement composition containing the cement α and the cement admixture.

A concrete having a unit cement composition amount of 300 kg/m³, a unit water amount of 180 kg/m³, and s/a of 38% by mass was prepared and measured for the setting time thereof, and the wall constructed therewith was observed for the state of crack formation. For comparison, the same test was performed for the case using an ordinary hydration heat inhibitor. The results are shown in Table 7.

### (Materials Used)

Hydration heat inhibitor a: commercially available dextrin, cold water soluble fraction: 30% by mass, which was used in Experiment Nos. 7-8 and 7-9 instead of the cement admixture.

Hydration heat inhibitor b: reagent grade tannic acid, which was used in Experiment Nos. 7-10 and 7-11 instead of the cement admixture.

### (Measurement Method)

State of Crack Formation: A wall having a thickness of 1 m, a height of 2.5 m, and a length of 10 m was constructed by using the prepared concrete. The formwork was retained until a material age of 7 days, and the state of crack formation was observed until a material age of 28 days. The rating C means a case where two or more cracks are formed, or a case where only one crack is formed, but the crack width thereof is 0.2 mm or more, the rating B means a case where only one crack is formed, but the crack width thereof is 0.1 mm or more and less than 0.2 mm, the rating A means a case where only one crack is formed, and the crack width thereof is less than 0.05 mm, and the rating AA means a case where no crack is visually observed.

**Table 7**

| Experiment No. | Cement admixture | Setting time (beginning) (h-m) | State of crack formation | Note |
|---|---|---|---|---|
| 7-1 | 0 | 6-45 | C | Comparative Example |
| 7-2 | 1 | 6-45 | B | Example |
| 7-3 | 3 | 6-40 | A | Example |
| 7-4 | 5 | 6-25 | AA | Example |
| 7-5 | 10 | 6-00 | AA | Example |
| 7-6 | 15 | 5-15 | AA | Example |
| 7-7 | 20 | 3-45 | A | Example |
| 7-8 | 0.1 | 11-00 | B | Comparative Example |
| 7-9 | 5 | * | * | Comparative Example |
| 7-10 | 0.1 | 12-45 | B | Comparative Example |
| 7-11 | 5 | * | * | Comparative Example |
| The content of the cement admixture (part by mass) is per 100 parts by mass of cement composition. * means not hardened. | | | | |

### Industrial Applicability

The cement admixture of the present invention has the effect of providing a cement composition that has excellent resistance to penetration of chloride ion, can sufficiently ensure the usable time, is excellent in the strength exhibition and the dimensional stability, and has significantly high temperature cracking resistance, and the like, and thus is suitable mainly for such purposes as a marine structure, a revetment structure, a mass concrete, and the like, in the civil engineering and construction fields, and the like.

The cement composition of the present invention can be applied to various purposes. The cement composition can be applied to a purpose of constructing a concrete structure, and can be used for salt damage suppressing process of an existing or newly constructed concrete structure by coating a cement concrete containing the cement composition of the present invention on the surface of the existing concrete structure.

## Claims

1. A cement admixture comprising a calcium aluminate having a chemical composition containing from 21 to 27 parts by mass of CaO, from 65 to 73 parts by mass of Al₂O₃, from 1 to 5 parts by mass of SiO₂, from 1 to 6 parts by mass of Fe₂O₃, and from 1 to 5 parts by mass of TiO₂, based on the total amount of CaO, Al₂O₃, SiO₂, Fe₂O₃, and TiO₂, and having a Blaine specific surface area of 2,000 to 6,000 cm2/g.

2. The cement admixture according to claim 1, wherein the chemical composition contains from 21 to 25 parts by mass of CaO, from 67 to 71 parts by mass of Al₂O₃, from 2 to 4 parts by mass of SiO₂, from 2 to 5 parts by mass of Fe₂O₃, and from 2 to 4 parts by mass of TiO₂.

3. The cement admixture according to claim 1 or 2, further comprising a gypsum compound.

4. The cement admixture according to any one of claims 1 to 3, which has resistance to penetration of chloride ion.

5. A cement composition comprising a cement and the cement admixture according to any one of claims 1 to 4.

6. A processing method for suppressing a salt damage of a concrete structure, comprising coating a cement concrete containing the cement composition according to claim 5 on a surface of an existing or newly constructed concrete structure.

## Patentansprüche

1. Zementzusatzmittel, umfassend ein Kalziumaluminat, das eine chemische Zusammensetzung aufweist, die von 21 bis 27 Massenteile CaO, von 65 bis 73 Massenteile Al₂O₃, von 1 bis 5 Massenteile SiO₂, von 1 bis 6 Massenteile Fe₂O₃ und von 1 bis 5 Massenteile TiO₂ enthält, basierend auf der Gesamtmenge an CaO, Al₂O₃, SiO₂, Fe₂O₃ und TiO₂, und die eine spezifische Oberfläche nach Blaine von 2.000 bis 6.000 cm²/g aufweist.

2. Zementzusatzmittel nach Anspruch 1, wobei die chemische Zusammensetzung von 21 bis 25 Massenteile CaO, von 67 bis 71 Massenteile Al₂O₃, von 2 bis 4 Massenteile SiO₂, von 2 bis 5 Massenteile Fe₂O₃ und von 2 bis 4 Massenteile TiO₂ enthält.

3. Zementzusatzmittel nach Anspruch 1 oder 2, ferner umfassend eine Gipsverbindung.

4. Zementzusatzmittel nach einem der Ansprüche 1 bis 3, die einen Widerstand gegen ein Eindringen von Chloridionen aufweist.

5. Zementzusammensetzung, umfassend einen Zement und das Zementzusatzmittel nach einem der Ansprüche 1 bis 4.

6. Verarbeitungsverfahren zum Unterdrücken eines Salzschadens einer Betonstruktur, umfassend ein Beschichten eines Zementbetons, der die Zementzusammensetzung nach Anspruch 5 auf einer Oberfläche einer bestehenden oder neu errichteten Betonstruktur enthält.

## Revendications

1. Adjuvant de ciment comprenant un aluminate de calcium ayant une composition chimique contenant de 21 à 27 parties en masse de CaO, de 65 à 73 parties en masse d'Al₂O₃, de 1 à 5 parties en masse de SiO₂, de 1 à 6 parties en masse de Fe₂O₃ et de 1 à 5 parties en masse de TiO₂, sur la base de la quantité totale de CaO, Al₂O₃, SiO₂, Fe₂O₃ et TiO₂, et ayant une surface spécifique de Blaine comprise entre 2 000 et 6 000 cm²/g.

2. Adjuvant de ciment selon la revendication 1, dans lequel la composition chimique contient de 21 à 25 parties en masse de CaO, de 67 à 71 parties en masse d'Al₂O₃, de 2 à 4 parties en masse de SiO₂, de 2 à 5 parties en masse de Fe₂O₃ et de 2 à 4 parties en masse de TiO₂.

3. Adjuvant de ciment selon la revendication 1 ou 2, comprenant en outre un composé de gypse.

4. Adjuvant de ciment selon l'une quelconque des revendications 1 à 3, qui présente une résistance à la pénétration de l'ion chlorure.

5. Composition de ciment comprenant un ciment et l'adjuvant de ciment selon l'une quelconque des revendications 1 à 4.

6. Procédé de traitement pour supprimer une dégradation par le sel d'une structure en béton, comprenant le revêtement d'un béton de ciment contenant la composition de ciment selon la revendication 5 sur une surface d'une structure en béton existante ou nouvellement construite.
